# EUROPÄISCHE PATENTSCHRIFT

(11) **EP 0 733 916 B1**
(45) Veröffentlichungstag und Bekanntmachung des Hinweises auf die Patenterteilung: **25.04.2001**
(21) Anmeldenummer: 95120330.6
(22) Anmeldetag: 21.12.1995
(51) Int. Cl.: G01V 3/12

(54) **Tragbares Ortungsgerät**
Portable localisation apparatus
Dispositif de localisation portatif

(30) Priorität: 24.03.1995 DE 19510875
(43) Veröffentlichungstag der Anmeldung: 25.09.1996
(73) Patentinhaber: Oberalp S.p.A., 39100 Bolzano (IT)
(72) Erfinder: Schulz, Richard, Dr., D-81247 München (DE); Zoor, Reinhold, D-82223 Eichenau (DE)
(74) Vertreter: Zmyj, Erwin, Dipl.-Ing., Dipl.-Wirtsch.-Ing.

(56) Entgegenhaltungen:
- DE-A- 3 046 895
- FR-A- 2 229 981
- FR-A- 2 586 819
- FR-A- 2 654 632
- US-A- 4 642 786
- US-A- 4 977 509

## Beschreibung

Die Erfindung bezieht sich auf ein tragbares Ortungsgerät, insbesondere zur Ortung verschütteter Personen in Lawinen, umfassend eine Sender-Empfänger-Einheit, wobei mehrere in verschiedene Richtungen ausgerichtete Sender mit gleicher Frequenz vorgesehen und diese zeitlich nacheinander mit einem Sendeimpuls belegbar sind.

Ein Ortungsgerät dieser Art ist aus der US-PS 46 42 786 bekannt. Bei diesem bekannten Gerät ist in der Praxis nicht zu vermeiden, daß eine Kopplung zwischen der mit einem Sendeimpuls belegten Sendeantenne und einer benachbarten Sendeantenne eintritt, wodurch nicht nur der Energiebedarf ansteigt, sondern auch der Sendeimpuls in seiner exakten Ausrichtung gestört ist. Dies ist bei Ortungsgeräten dieser Art nachteilig, da der erhöhte Energieverbrauch zu einem raschen Verbrauch der mitgetragenen Batterie führt und andererseits das Auffinden der Verschütteten erschwert bzw. zeitlich verzögert wird, was bei solchen Lawinenunglücken häufig tragische Folgen nach sich zieht.

Aufgabe der Erfindung ist es, ein tragbares Ortungsgerät so auszugestalten, daß mit größerer Sicherheit und unabhängig von der Lage der vom Verschütteten getragenen Sendeantenne eine direkte Richtungsortung vom Suchenden zum Verschütteten bei geringem Energiebedarf gegeben ist.

Diese Aufgabe wird durch die im Anspruch 1 angegebenen Merkmale gelöst. Durch die erfindungsgemäße Ausgestaltung wird die erwähnte Einkopplung so stark reduziert, daß das Maximum des Feldstärkevektors in Richtung des Verschütteten zeigt.

Weitere Ausgestaltungen der Erfindung ergeben sich aus den Unteransprüchen.

Als Sende- und Empfangsfrequenz dient die international festgelegte Suchfrequenz von 457kHz.

Die Feldstärkeauswertung erfolgt im Empfänger durch mehrere Leuchtdioden, wobei Feldstärkeänderungen im Verhältnis von ca. 10:1 durch die Leuchtdichteänderung einer Diode dargestellt werden. Ändert sich die Feldstärke stärker, so schaltet sich eine weitere Diode dazu oder ab, die dann ihrerseits wieder im Verhältnis 10:1 ihre Leuchtdichte ändert. Dies entspricht einer dekadisch logarithmischen Anzeige, was die Anzahl der leuchtenden Dioden betrifft. Damit können sehr große Feldstärkebereiche von beispielsweise 100.000:1 mit fünf Leuchtdioden oder Feldstärkebereiche von 10.000:1 mit vier Leuchtdioden ausgewertet werden. Die Leuchtdichtesteuerung einer Diode wird mit Hilfe eines Spannungs-Stromwandlers vorgenommen. Der Diodenstrom und damit die Leuchtdichte einer Diode ist dann direkt proportional zur empfangenen Feldstärke. Überschreitet der Diodenstrom einen Sättigungswert, so beginnt die nächste Diode mitzuleuchten.

Durch Kombination des Suchgerätes mit einem elektronischen Kompass ist es möglich, die einmal ermittelte Richtung des Verschütteten bezüglich des Suchenden absolut zu bestimmen. Weicht der Suchende auf dem Weg zum Verschütteten von dieser Richtung ab, so wird diese Abweichung ebenfalls durch das Aufleuchten von zwei seitlich der Diodenreihe liegende Dioden angezeigt.

Das Suchgerät ist in vorteilhafter Weise so ausgestattet, daß durch Drücken und Niederhalten eines Knopfes das Suchgerät in den Empfangsmodus übergeht. Treten nämlich für den Suchenden selbst Schwierigkeiten auf, z.B. bei Nachlawinen, so schaltet sich das Gerät nach Auslassen der Empfangstaste automatisch wieder in den Sendemodus zurück und der Suchende kann seinerseits geortet werden. Dabei wird eine der Sendeantennen als Empfangsantenne benutzt. Die Empfangsantenne besitzt dabei die Richtcharakteristik eines magnetischen Dipols. Die Richtcharakteristik wird zur Peilung des Verschütteten benutzt.

Bei Signalen sehr geringer Feldstärke ist zusätzlich zur optischen Feldstärkeauswertung auch eine akustische Auswertung von Vorteil, da in diesem Fall Signale, die im Bereich der Rauschspannung des Empfängers liegen, noch bewertet werden können.

Um die Zuverlässigkeit des Gerätes beurteilen zu können, ist es notwendig die vorhandene Batteriekapazität zu prüfen. Dazu wird während einer kurzen Dauer von maximal 1 Sekunde die Betriebsspannung bei einem definierten Batteriestrom gemessen. Übersteigt die Spannung einen Schwellwert, so wird durch Aufleuchten einer Leuchtdiode die Batteriekapazität als ausreichend bewertet.

Wenn in Weiterbildung der Erfindung ein Höhenmesser und ein Thermometer mit dem Suchgerät kombiniert werden, so entsteht hierdurch ein universal einsetzbares Gerät, das bei kompakten Abmessungen mehrere Funktionen erfüllt.

Um sich auf weitere Entfernungen, die bis zu einigen Kilometern betragen können, bemerkbar zu machen, was bei einem Unfall ohne Lawinenverschüttung der Fall ist, ist es vorteilhaft das Gerät mit einer Blitzlampe und einem kleinen Notrufsender, der auf der Flugzeugnotruffrequenz arbeitet, zu kombinieren. Ein Unfallopfer kann sich mit einem so ausgestalteten Gerät entweder weit entfernt befindlichen Suchmannschaften oder gegenüber überfliegenden Helicoptern bemerkbar machen.

Die Erfindung wird nachfolgend anhand eines Ausführungsbeispieles näher erläutert. In der Zeichnung zeigen:
- **Figur 1:**: die Ausbildung magnetischer Feldlinien eines bewickelten Ferritstabes;
- **Figur 2:**: die Ausbildung von Feldlinien eines magnetischen Dipols, perspektivisch dargestellt;
- **Figur 3:**: die erfindungsgemäße Anordnung von drei orthogonalen Ferritantennen;
- **Figur 4:**: die Anordnung einer Leuchtdiodenzeile;
- **Figur 5:**: eine Schaltung für eine von drei Sendestufen mit elektronischer Verstimmung; und
- **Figur 6:**: eine gegenüber Figur 4 ergänzte Leuchtdiodenanordnung.

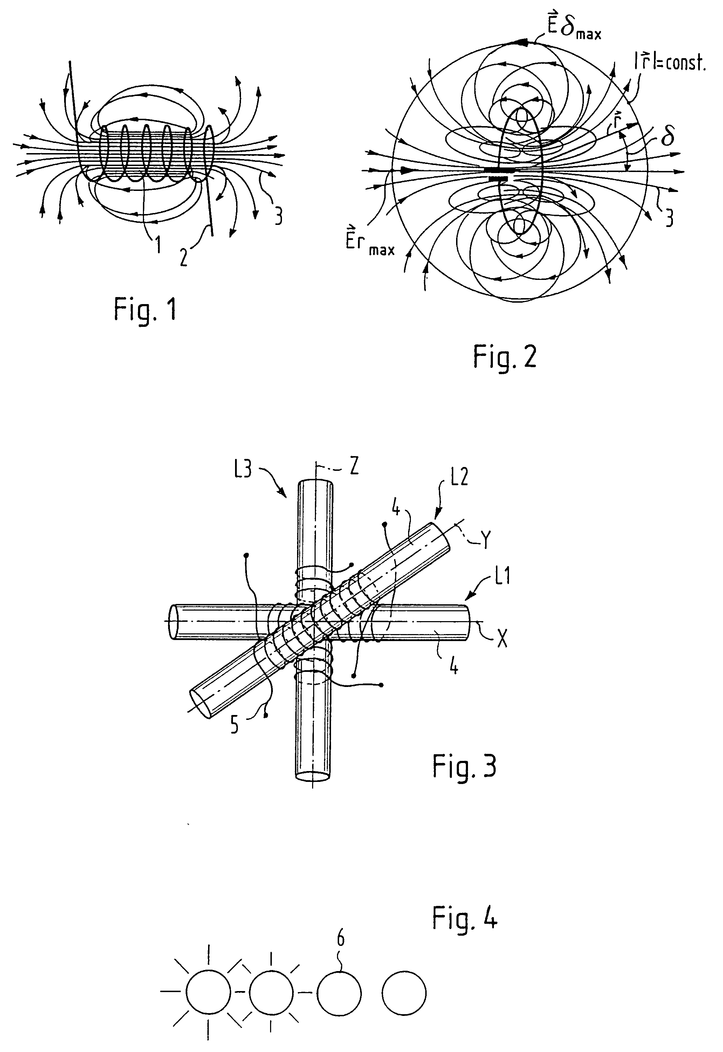

Figur 1 zeigt einen Ferritstab 1, der von einem Leiter, d.h. einer Spule 2 umgeben ist. Dieser so aufgebaute magnetische Dipol erzeugt ein Magnetfeld, dessen Feldlinien 3 in Figur 1 in Ansicht und in Figur 2 perspektivisch dargestellt sind. Ein solcher Dipol bildet die Grundlage für die bekannten Suchgeräte, die mit ihren Nachteilen weiter oben erläutert wurden.

Figur 3 zeigt die erfindungsgemäße Anordnung von drei Sendeantennen L1, L2 und L3, die durch drei orthogonal zueinander stehende Ferritstäbe 4 mit entsprechenden Wicklungen 5 gebildet sind. Der Aufbau einer jeden einzelnen Sendeantenne entspricht dem Aufbau, wie er in Figur 1 gezeigt ist. Die Wirkungsweise und die möglichen Nachteile einer solchen Anordnung sind im Zusammenhang mit der Erläuterung der Erfindung weiter oben dargelegt worden. Die einzelnen Antennen L1 bis L3 sind entsprechend der orthogonalen Anordnung in die jeweiligen Raumrichtungen ausgerichtet, die mit X, Y und Z bezeichnet sind.

Figur 4 zeigt eine Anordnung von vier Dioden 6 in Reihe, die mit zunehmender Feldstärke des Magnetfeldes der Reihe nach aufleuchten, wobei jede Diode einen gewissen Feldstärkebereich durch entsprechende Veränderung der Leuchtdichte anzeigt. Bei Überschreitung eines bestimmten Grenzwertes wird dann die nachfolgende Diode hinzugeschaltet bzw. bei Abnehmen der Feldstärke, abgeschaltet.

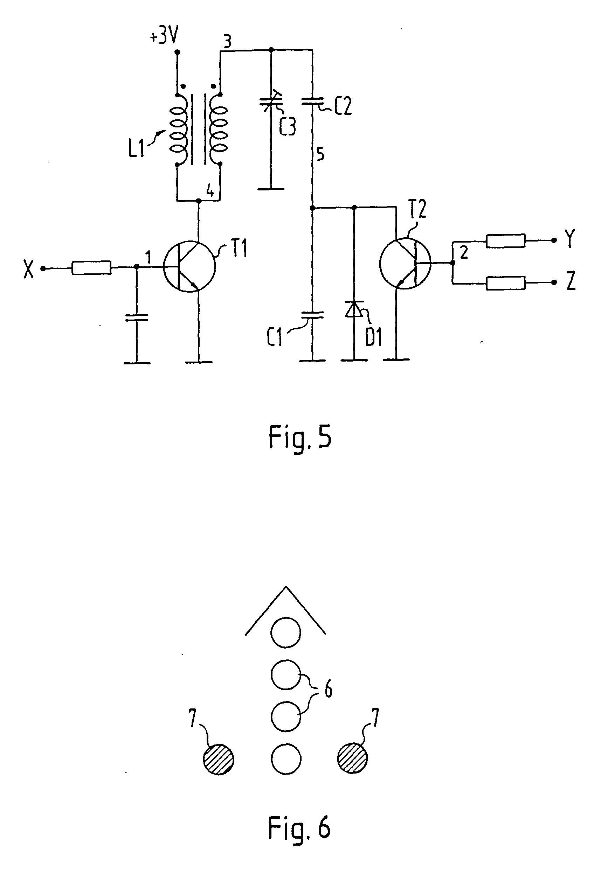

Figur 5 zeigt ein Beispiel einer Schaltung für eine von drei Sendestufen mit elektronischer Verstimmung, d.h. Änderung der Resonanzfrequenz. In dieser Schaltung wird ein Transistor T1 während der Zeit des Sendeimpulses in X-Richtung, der seinerseits die Antenne L1, die in X-Richtung ausgerichtet ist, ansteuert, von einem Oszillator mit 457kHz angesteuert. Während dieser Zeit ist ein weiterer Transistor T2 gesperrt, da an den Eingängen Y und Z für die Dauer des Sendeimpulses Massepotential, d.h. 0V, anliegt. Kondensatoren C1, C2 und C3 ergeben zusammen mit L1 einen Resonanzkreis, der auf 457kHz abgestimmt ist. Ist der Transistor T1 und damit die Antenne L1 nicht mit einem Sendeimpuls belegt, so ist der Transistor T2 leitend und damit der Kondensator C1 über dem Transistor T2 und die Diode D1 kurzgeschlossen. Frequenzbestimmend sind nur noch die Kondensatoren C3 und C2. Es stellt sich somit eine tiefere Resonanzfrequenz dieser Antenne ein. Dadurch wird der gerade aktiven Antenne praktisch keine Energie mehr entzogen.

Figur 6 zeigt eine gegenüber Figur 4 erweitere Leuchtdiodenanordnung, wobei außer den in Reihe angeordneten Leuchtdioden 6 noch zwei seitlich angeordnete Leuchtdioden 7 vorgesehen sind, von denen bei Abweichung von der Richtung zum Verschütteten, eine Leuchtdiode aufleuchtet und somit die Richtung der Abweichung anzeigt.

## Patentansprüche

1. Tragbares Ortungsgerät, insbesondere zur Ortung verschütteter Personen in Lawinen, umfassend eine Sender-Empfänger-Einheit, wobei mehrere in verschiedene Richtungen ausgerichtete Sender (L1, L2, L3) mit gleicher Frequenz vorhanden und diese zeitlich nacheinander mit einem Sendeimpuls belegbar sind, **dadurch gekennzeichnet,** daß jeweils diejenige Sendeantenne (L1, L2, L3) in der Zeit, während sie frei von einem Sendeimpuls ist, elektronisch verstimmbar ist.

2. Ortungsgerät nach Anspruch 1, **dadurch gekennzeichnet**, daß die Sendeantennen Rahmenantennen sind.

3. Ortungsgerät nach Anspruch 1, **dadurch gekennzeichnet**, daß die Sendeantennen eine Kombination von Ferrit- und Rahmenantennen sind.

4. Ortungsgerät nach einem der Ansprüche 1 bis 3, **dadurch gekennzeichnet,** daß die Sendefrequenz 457 kHz beträgt.

5. Ortungsgerät nach einem der Ansprüche 1 bis 4, **dadurch gekennzeichnet**, daß eine Sendeantenne als Empfangsantenne verwendbar ist.

6. Ortungsgerät nach einem der Ansprüche 1 bis 5, **dadurch gekennzeichnet,** daß der Empfänger mehrere Leuchtdioden (6) aufweist, deren Leuchtintensität eine Feinanzeige der Feldstärke und deren Anzahl eine Grobanzeige der Feldstärke ermöglicht.

7. Ortungsgerät nach Anspruch 6, **dadurch gekennzeichnet,** daß die Anzahl der leuchtenden Dioden (6) dem Logarithmus der Feldstärke proportional ist.

8. Ortungsgerät nach Anspruch 6 oder 7, **dadurch gekennzeichnet,** daß die Leuchtintensität der einzelnen Dioden (6) bis zu einem Sättigungswert linear mit der Feldstärke ansteigt.

9. Ortungsgerät nach einem der Ansprüche 6 bis 8, **dadurch gekennzeichnet,** daß durch weitere Leuchtdioden (7) eine Winkelabweichung zwischen Gehrichtung des Suchenden und der Richtung des Verschütteten anzeigbar ist.

10. Ortungsgerät nach einem der Ansprüche 1 bis 9, **dadurch gekennzeichnet,** daß insbesondere zum Empfang schwächster Feldstärkesignale eine akustische Anzeige vorhanden ist.

11. Ortungsgerät nach einem der Ansprüche 1 bis 10, **dadurch gekennzeichnet,** daß das Ortungsgerät durch Niederhalten einer Taste auf Empfangsbetrieb umschaltbar ist und bei Freigeben der Taste selbsttätig auf Sendebetrieb umschaltbar ist.

12. Ortungsgerät nach einem der Ansprüche 1 bis 11, **dadurch gekennzeichnet,** daß das Ortungsgerät mit einer elektronischen Batteriezustandskontrolle versehen ist.

13. Ortungsgerät nach einem der Ansprüche 1 bis 12, **dadurch gekennzeichnet,** daß das Ortungsgerät mit einem elektronischen Höhenmesser kombiniert ist.

14. Ortungsgerät nach einem der Ansprüche 1 bis 13, **dadurch gekennzeichnet**, daß das Ortungsgerät mit einem elektronischen Kompass kombiniert ist.

15. Ortungsgerät nach einem der Ansprüche 1 bis 14, **dadurch gekennzeichnet**, daß das Ortungsgerät mit einem elektronischen Thermometer kombiniert ist.

16. Ortungsgerät nach einem der Ansprüche 1 bis 15, **dadurch gekennzeichnet,** daß das Ortungsgerät mit einem elektronischen Blitzlicht kombiniert ist.

17. Ortungsgerät nach einem der Ansprüche 1 bis 16, **dadurch gekennzeichnet,** daß das Ortungsgerät mit einem Notrufsender auf der Notfrequenz für Flugzeuge kombiniert ist.

## Claims

1. Portable position-finding instrument, particularly for finding the position of people buried in avalanches, comprising a transceiver unit, with a plurality of transmitters (L1, L2, L3) at the same frequency being present which are oriented in different directions and can have a transmission pulse applied to them at successive times, characterized in that each transmission antenna (L1, L2, L3) can be electronically detuned in the time during which it is free of a transmission pulse.

2. Position-finding instrument according to Claim 1, characterized in that the transmission antennas are frame antennas.

3. Position-finding instrument according to Claim 1, characterized in that the transmission antennas are a combination of ferrite antennas and frame antennas.

4. Position-finding instrument according to one of Claims 1 to 3, characterized in that the transmission frequency is 457 kHz.

5. Position-finding instrument according to one of Claims 1 to 4, characterized in that a transmission antenna can be used as a reception antenna.

6. Position-finding instrument according to one of Claims 1 to 5, characterized in that the receiver has a plurality of light-emitting diodes (6) whose luminous intensity permits a fine indication of the field strength and whose number permits a coarse indication of the field strength.

7. Position-finding instrument according to Claim 6, characterized in that the number of light-emitting diodes (6) is proportional to the logarithm of the field strength.

8. Position-finding instrument according to Claim 6 or 7, characterized in that the luminous intensity of the individual diodes (6) rises linearly with the field strength up to a saturation value.

9. Position-finding instrument according to one of Claims 6 to 8, characterized in that further light-emitting diodes (7) permit indication of an angle discrepancy between the direction in which the searching person is walking and the direction of the buried person.

10. Position-finding instrument according to one of Claims 1 to 9, characterized in that there is an audible indicator, particularly to receive very weak field strength signals.

11. Position-finding instrument according to one of Claims 1 to 10, characterized in that the position-finding instrument can be changed over to reception mode by holding down a button and can be automatically changed over to transmission mode when the button is released.

12. Position-finding instrument according to one of Claims 1 to 11, characterized in that the position-finding instrument is provided with an electronic battery state monitor.

13. Position-finding instrument according to one of Claims 1 to 12, characterized in that the position-finding instrument is combined with an electronic altimeter.

14. Position-finding instrument according to one of Claims 1 to 13, characterized in that the position-finding instrument is combined with an electronic compass.

15. Position-finding instrument according to one of Claims 1 to 14, characterized in that the position-finding instrument is combined with an electronic thermometer.

16. Position-finding instrument according to one of Claims 1 to 15, characterized in that the position-finding instrument is combined with an electronic flashlight.

17. Position-finding instrument according to one of Claims 1 to 16, characterized in that the position-finding instrument is combined with an emergency transmitter on the emergency frequency for aircraft.

## Revendications

1. Dispositif de localisation portatif, notamment pour localiser des personnes ensevelies dans des avalanches, comprenant un module émetteur/récepteur, plusieurs émetteurs (L1, L2, L3) dirigés dans différentes directions étant présents et ceux-ci pouvant recevoir chronologiquement une impulsion d'émission, caractérisé en ce que chaque antenne d'émission (L1, L2, L3) peut être accordée électroniquement dans le temps pendant qu'elle ne reçoit pas d'impulsion d'émission.

2. Dispositif de localisation selon la revendication 1, caractérisé en ce que les antennes d'émission sont des antennes cadres.

3. Dispositif de localisation selon la revendication 1, caractérisé en ce que les antennes d'émission sont une combinaison d'antennes en ferrite et d'antennes cadres.

4. Dispositif de localisation selon l'une des revendications 1 à 3, caractérisé en ce que la fréquence d'émission est de 457 kHz.

5. Dispositif de localisation selon l'une des revendications 1 à 4, caractérisé en ce qu'une antenne d'émission peut être utilisée comme antenne de réception.

6. Dispositif de localisation selon l'une des revendications 1 à 5, caractérisé en ce que le récepteur présente plusieurs diodes électroluminescentes (6) dont l'intensité lumineuse permet une indication précise de l'intensité du champ et dont le nombre permet une indication approximative de l'intensité du champ.

7. Dispositif de localisation selon la revendication 6, caractérisé en ce que le nombre de diodes électroluminescentes (6) est proportionnel au logarithme de l'intensité du champ.

8. Dispositif de localisation selon l'une des revendications 6 ou 7, caractérisé en ce que l'intensité lumineuse de chacune des diodes (6) croît de manière linéaire avec l'intensité du champ jusqu'à une valeur de saturation.

9. Dispositif de localisation selon l'une des revendications 6 à 8, caractérisé en ce que d'autres diodes électroluminescentes (7) permettent d'indiquer un décalage angulaire entre le sens de déplacement des secours et la direction où se trouve la personne ensevelie.

10. Dispositif de localisation selon l'une des revendications 1 à 9, caractérisé par la présence d'un signal sonore, notamment pour la réception des signaux d'intensité de champ les plus faibles.

11. Dispositif de localisation selon l'une des revendications 1 à 10, caractérisé en ce que le dispositif de localisation peut passer en mode réception en maintenant une touche enfoncée et qu'il revient automatiquement en mode émission en relâchant cette touche.

12. Dispositif de localisation selon l'une des revendications 1 à 11, caractérisé en ce que le dispositif de localisation est équipé d'un contrôle du niveau de charge de la pile.

13. Dispositif de localisation selon l'une des revendications 1 à 12, caractérisé en ce que le dispositif de localisation est combiné avec un dispositif de mesure électronique de la hauteur.

14. Dispositif de localisation selon l'une des revendications 1 à 13, caractérisé en ce que le dispositif de localisation est combiné avec une boussole électronique.

15. Dispositif de localisation selon l'une des revendications 1 à 14, caractérisé en ce que le dispositif de localisation est combiné avec un thermomètre électronique.

16. Dispositif de localisation selon l'une des revendications 1 à 15, caractérisé en ce que le dispositif de localisation est combiné avec un flash électronique.

17. Dispositif de localisation selon l'une des revendications 1 à 16, caractérisé en ce que le dispositif de localisation est combiné avec un émetteur d'appel d'urgence sur la fréquence de secours des aéronefs.
